# FASCICULE DE BREVET EUROPEEN

(11) **EP 0 655 360 B1**
(45) Date de publication et mention de la délivrance du brevet: **22.01.1997**
(21) Numéro de dépôt: 94118634.8
(22) Date de dépôt: 26.11.1994
(51) Int. Cl.: B60K 15/05, E05D 1/04, E05D 11/10

(54) **Volet articulé pour la fermeture d'une trappe à carburant de véhicule automobile**
Schwenkbarer Tankverschlussdeckel für Personenkraftwagen
Hinged cover for vehicle fuel filler inlet

(30) Priorité: 29.11.1993 FR 9314253
(43) Date de publication de la demande: 31.05.1995
(73) Titulaire: PAUL JOURNEE S.A., F-60240 Reilly (FR)
(72) Inventeur: Galland, Didier, F-60590 Eragny/Epte (FR)
(74) Mandataire: Lemaire, Marc

(56) Documents cités:
- EP-A- 0 124 410
- EP-A- 0 445 559
- DE-A- 3 633 630
- FR-A- 821 654
- US-A- 2 160 485

## Description

La présente invention concerne un volet pour la fermeture d'une trappe donnant accès à une tête de remplissage reliée à une canalisation de remplissage d'un réservoir de carburant de véhicule automobile.

Une tête de remplissage se présente généralement sous la forme d'un logement ou d'un corps creux dont la face supérieure est ouverte dans une partie de la carosserie du véhicule et dans lequel débouche l'extrémité libre de la canalisation de remplissage afin de permettre le remplissage du réservoir par introduction d'une lance de remplissage dans la canalisation.

L'orifice de la canalisation peut être obturé par un bouchon amovible, la face ouverte de la tête de remplissage constituant l'ouverture d'une trappe fermée par un volet constituée pour l'essentiel par un panneau articulé, par ses moyens d'articulation sur un élément de la structure du véhicule autour d'un axe sensiblement parallèle au plan du panneau et par des moyens de rappel élastique du panneau vers une première position stable de fermeture de la trappe et vers une seconde position stable d'accès à la trappe.

Enfin, le bouchon de fermeture de la canalisation peut être un élément indépendant ou un élément porté par la face intérieure du panneau du volet de fermeture de la trappe.

On connaît de nombreuses conceptions d'un tel volet dans lesquelles les moyens d'articulation du panneau sont particulièrement encombrants et difficiles à monter en faisant notamment appel à une charnière de type classique à pivots fixe et mobile et reliés entre eux par un axe transversal qui nécessitent de terminer les opérations de montage du panneau articulé, soit par la fixation de l'un des pivots, soit par la mise en place de l'axe transversal reliant et articulant les pivots.

De plus, les moyens de rappel élastique compliquent également l'assemblage et le montage final dans la mesure où ils doivent également être reliés à la partie fixe de la structure de la caisse du véhicule automobile et au volet articulé.

La présente invention a pour but de proposer une nouvelle conception d'un volet de fermeture d'une trappe à carburant qui permet de remédier aux inconvénients qui viennent d'être mentionnés.

Dans ce but, l'invention propose un volet du type mentionné précédemment, caractérisé en ce que les moyens d'articulation du panneau comportent un coulisseau mobile en forme de secteur annulaire cylindrique qui est fixé au panneau par un premier de ses bords longitudinaux d'extrémité et comportent une coulisse fixe dont le corps est fixé à un élément de la structure du véhicule et comporte un logement en forme de secteur annulaire cylindrique formant glissière dont une extrémité ouverte reçoit le coulisseau dont le second bord longitudinal d'extrémité est susceptible de se déplacer à l'intérieur de la glissière entre deux positions angulaires opposées associées aux deux positions stables du panneau.

Selon d'autres caractéristiques de l'invention :
- le premier bord longitudinal d'extrémité du coulisseau est fixé sur la face interne du panneau ;
- le coulisseau comporte un collet radial formé en saillie sur l'une de ses faces cylindriques et dont une face radiale comporte un profil de came, le logement de la coulisse formant glissière comporte une partie complémentaire qui reçoit le collet radial en coulissement, et la coulisse comporte un élément suiveur de came qui est monté coulissant à l'intérieur du corps de la coulisse selon une direction parallèle à l'axe de la glissière et qui est sollicité élastiquement en coopération avec le profil de came porté par le collet radial ;
- le profil de came comporte, agencés successivement depuis le premier bord longitudinal d'extrémité vers le second bord longitudinal d'extrémité du coulisseau, un premier cran définissant la première position stable du panneau, une première rampe procurant un effet de rappel élastique du panneau vers sa première position stable, une deuxième rampe, d'orientation opposée à celle de la première rampe, procurant un effet de rappel élastique du panneau vers sa seconde position stable, et un second cran définissant la seconde position stable du panneau ;
- le profil de came se prolonge au-delà du second cran par une troisième rampe, de même orientation que la deuxième rampe, permettant le franchissement du doigt d'indexation lors de l'introduction du coulisseau dans la glissière ;
- le collet radial est formé en saillie sur la face cylindrique convexe du coulisseau ;
- le corps de la coulisse est un boîtier en deux parties séparées par un plan de joint perpendiculaire à l'axe de la glissière ;
- le plan de joint s'étend sensiblement au milieu de la partie complémentaire du logement formant glissière qui reçoit en coulissement le collet radial avec son profil de came ; et
- le collet radial est formé à l'une des extrémités axiales du coulisseau.

D'autres caractéristiques et avantages de l'invention apparaîtront à la lecture de la description détaillée qui va suivre pour la compréhension de laquelle on se reportera aux dessins annexés dans lesquels :

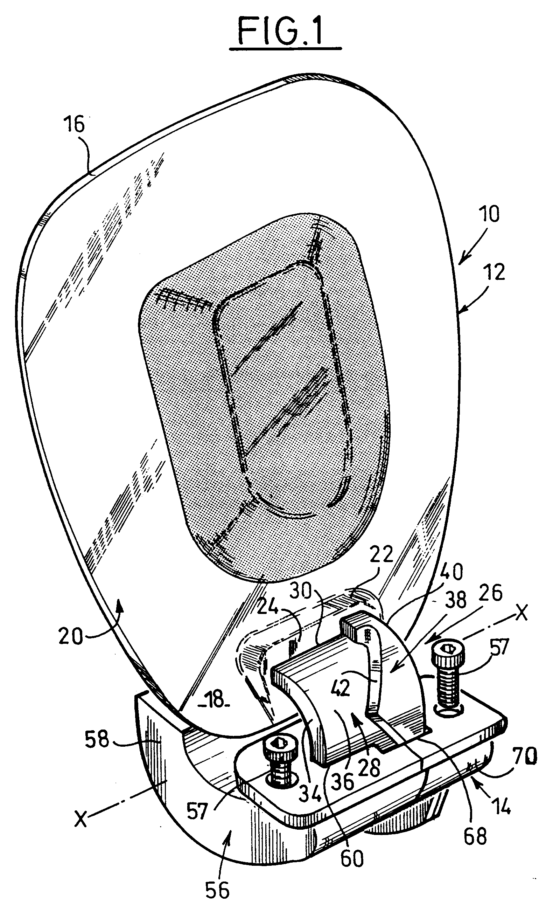

- La figure 1 est une vue en perspective illustrant un volet de trappe à carburant réalisé conformément aux enseignements de l'invention qui est représenté en position stable ouverte d'accès à la trappe de carburant ;
- la figure 2 est une vue partielle en perspective éclatée illustrant les principaux composants du volet illustré à la figure 1 ;

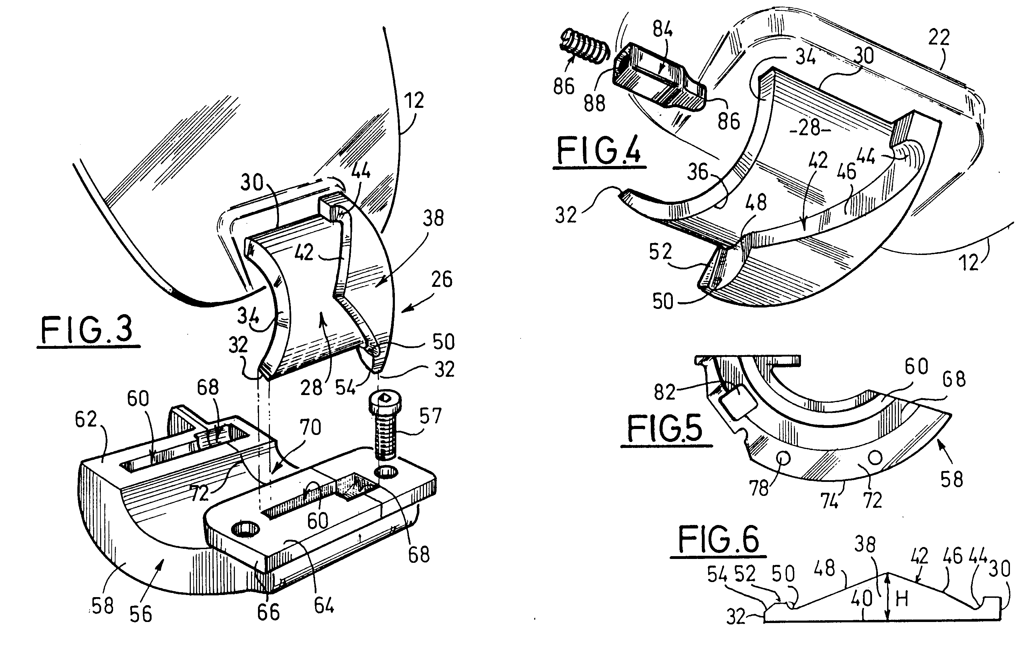

- la figure 3 est une vue partielle en perspective illustrant le panneau et ses moyens d'articulation avant leur assemblage ;
- la figure 4 est une vue partielle en perspective éclatée illustrant plus en détail le coulisseau et son profil de came ainsi que le doigt d'indexation coopérant avec le profil de came ;
- la figure 5 est une vue axiale en bout selon la flèche F de la figure 2 illustrant l'un des deux demi-boîtiers constituant la coulisse ; et
- la figure 6 est une vue latérale développée du profil de came équipant le coulisseau.

On a représenté sur les figures un volet articulé 10, prévu pour la fermeture d'une trappe à carburant (non représentée) d'un véhicule automobile qui est constitué pour l'essentiel par un panneau 12 qui est monté articulé en pivotement autour d'un axe géométrique X-X par des moyens d'articulation 14.

Le panneau 12 présente sensiblement la forme d'une plaque dont le contour ou bord latéral 16 correspond au contour de l'ouverture de la trappe qu'il permet d'obturer lorsqu'il est en position stable fermée.

Au voisinage de l'une de ses extrémités 18, la face intérieure 20 du panneau 12 comporte un renflement 22 sur la face intérieure 24 duquel est fixé un coulisseau 26.

Conformément à l'invention, le coulisseau 26 est constitué par un secteur d'une paroi annulaire cylindrique 28 qui est délimitée angulairement par un premier bord longitudinal 30 parallèle à l'axe X-X et par lequel la paroi 28 est fixée au panneau 12 et par un second bord longitudinal libre 32 parallèle au premier bord longitudinal 30.

La paroi annulaire en secteur de cylindre 28 est également délimitée axialement par un premier bord annulaire d'extrémité 34.

La face cylindrique convexe 36 de la paroi 28 du coulisseau 26 comporte un collet radial 38 formé en saillie et d'épaisseur constante qui s'étend axialement depuis le second bord annulaire d'extrémité 40 de la paroi 28 en direction du premier bord 34.

La face radiale 42 du collet 38 tourné vers le bord 34 du coulisseau 28 constitue un profil de came qui est illustré en détail aux figures 4 et 6.

En partant du premier bord longitudinal 30 vers le second bord longitudinal 32, c'est-à-dire de la droite vers la gauche en considérant la figure 6, le profil de came 42 comporte successivement un premier cran 44, une première rampe 46 inclinée par rapport au bord annulaire 40, une deuxième rampe 48 inclinée dans le sens opposé par rapport à la première rampe 46, un second cran 50, un palier 52 parallèle au bord annulaire 40 et enfin une troisième rampe 54 de même orientation que la deuxième rampe 48.

Conformément à l'invention, le coulisseau 26 est prévu pour être reçu en coulissement dans une coulisse 56 qui est prévue pour être fixée au moyen de vis 57 sur une partie (non représentée) de la structure du véhicule.

La coulisse 56 comporte un corps creux en deux parties dont la première partie principale 58 est un demi-boîtier dans lequel est formée une glissière 60 qui débouche dans les deux faces longitudinales d'extrémité 62 et 64 et dont la section et la forme en arc de cylindre sont complémentaires de celles de la paroi annulaire cylindrique 28 du coulisseau 26.

La paroi d'extrémité 64 comporte une bride 66 pour la fixation de la coulisse 56 au moyen des vis 57.

Afin de permettre le passage du collet radial 38 avec son profil de came 42, la partie principale de la glissière 60 se prolonge axialement par une partie 68 dont la hauteur, c'est-à-dire parallèlement à l'axe de la glissière cylindrique 60, est supérieure à la hauteur maximale H du profil de came 42 (voir figure 6).

La seconde partie de la coulisse 56 est constituée par un second demi-boîtier 70 qui délimite avec le premier demi-boîtier 58 un plan de joint 72 reliés entre eux par des brides radiales extérieures de fixation 74 et 76 comportant des trous 78 et 80 prévus pour recevoir des vis d'assemblage.

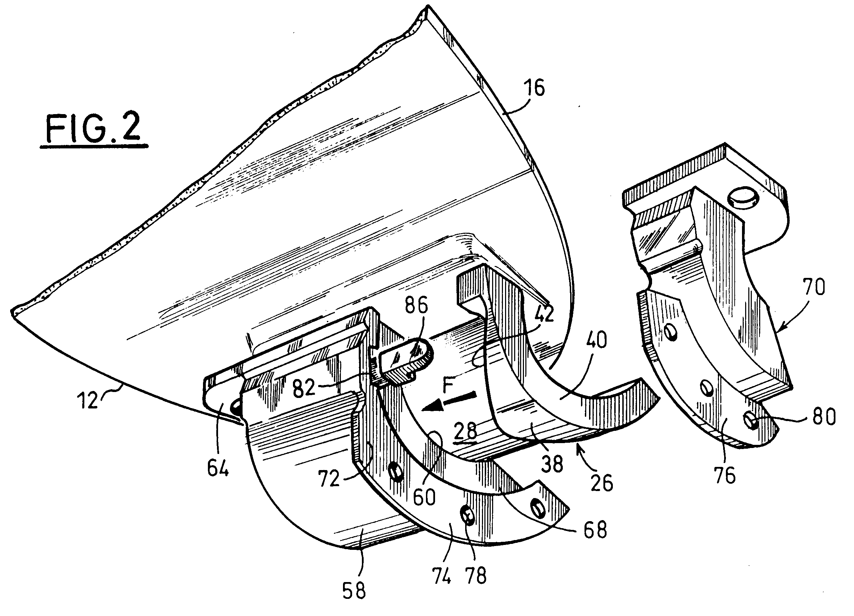

Le corps de la coulisse 56 comporte également, formé dans le demi-boîtier principal 58, un logement borgne 82 qui débouche dans la partie complémentaire 68 de la glissière et qui est prévu pour recevoir en coulissement un poussoir ou doigt d'indexation 84 (voir figures 2 et 4) dont l'extrémité arrondie 86 constitue un élément suiveur de came qui est prévu pour coopérer avec le profil de came 42 du coulisseau 26 et qui est sollicité élastiquement en coopération avec la came par un ressort hélicoïdal de compression 86 agencé entre le fond du logement borgne 82 et le fond d'un logement correspondant 88 formé dans le corps du doigt d'indexation 84.

Le doigt d'indexation est de section transversale sensiblement carrée 84 complémentaire de celle du logement borgne 82 afin d'éviter toute rotation intempestive du doigt d'indexation.

L'assemblage et le montage des différents composants du volet s'effectuent de la manière suivante.

Le panneau 12 avec son coulisseau 26 sont réalisés indépendamment des moyens d'articulation 14, et éventuellement venus de matière par moulage en une seule pièce.

L'assemblage de la coulisse 56 s'effectue également indépendamment après avoir mis en place le doigt d'indexation 84 avec son ressort 86 à l'intérieur du logement 82 du demi-boîtier principal 58 puis en fermant ce dernier par le second demi-boîtier 70 de manière à constituer un sous-ensemble qui peut être fixé sur une partie fixe de la structure de la caisse du véhicule automobile au moyen de vis 57, et ceci indépendamment du panneau 12.

La mise en place du panneau 12 du volet 10 s'effectue en introduisant le coulisseau 26 avec son profil de came 42 dans la coulisse 56.

Dans ce but, l'opérateur introduit le bord longitudinal d'extrémité 32 du coulisseau 26 dans les logements 60 et 68 de la coulisse, préalablement fixée sur la structure du véhicule automobile.

Lors de ce mouvement d'introduction, la troisième rampe 54 provoque le franchissement du doigt d'indexation 84 du fait de sa coopération avec l'extrémité arondie 86 de ce dernier qu'elle repousse à l'intérieur du logement 82. Le mouvement d'introduction se poursuit en coulissement cylindrique jusqu'à ce que l'extrémité 86 du doigt d'indexation 84 pénètre dans le second cran 50.

Le panneau 12 occupe alors sa position stable ouverte donnant accès à la trappe de carburant vers laquelle il est rappelé élastiquement du fait de la présence de la seconde rampe 48.

En effet, si l'opérateur tente de poursuivre le mouvement de coulissement cylindrique visant à introduire le coulisseau 26 dans la glissière 60 avec un effort insuffisant, il ne réussit pas à faire franchir la seconde rampe 48 par le doigt d'indexation 84 et si il relâche son effort, la coopération de ces deux éléments provoque à nouveau la sortie partielle du coulisseau 26 hors de la glissière 60 jusqu'à ce que le doigt d'indexation 84 soit à nouveau dans le second cran 50.

Pour provoquer la fermeture complète du volet, l'utilisateur doit appliquer un effort suffisant d'introduction du coulisseau 26 dans la glissière 60 en agissant sur le panneau 12 de manière que le doigt d'indexation 84 franchisse le sommet séparant la deuxième rampe 48 de la première rampe 42. Dès que ce sommet est franchi, l'action du ressort 86 en coopération avec la première rampe 42 provoque la fermeture automatique assistée élastiquement du panneau 12 jusqu'à ce que le doigt 84 atteigne le premier cran 44 qui définit la position stable fermée du volet 10.

L'ouverture du volet 10 s'effetue, de manière inverse, en sollicitant le panneau 12 dans le sens de l'ouverture jusqu'à provoquer le franchissement du sommet séparant la première rampe 42 de la deuxième rampe 48, course au-delà de laquelle le panneau 12 est rappelé élastiquement vers sa position stable ouverte dans laquelle l'extrémité 86 du doigt d'indexation 84 est à nouveau dans le second cran 50.

## Revendications

1. Volet articulé (10) pour la fermeture d'une trappe donnant accès à une tête de remplissage reliée à une canalisation de remplissage d'un réservoir de carburant de véhicule automobile, du type comportant un panneau mobile (12) monté articulé sur un élément de la structure du véhicule autour d'un axe (X-X) sensiblement parallèle au plan du panneau (12) et des moyens de rappel élastique du panneau vers une première position stable de fermeture de la trappe et une seconde position stable d'accès à la trappe, caractérisé en ce que les moyens (14) d'articulation du panneau (12) comportent un coulisseau mobile (26) en forme de secteur annulaire cylindrique (28) qui est fixé au panneau (12) par un premier (30) de ses bords longitudinaux d'extrémité et comportent une coulisse fixe (56) dont le corps est fixé à un élément de la structure du véhicule et comporte un logement (60) en forme de secteur annulaire cylindrique formant glissière dont une extrémité ouverte reçoit le coulisseau (26, 28) dont le second bord longitudinal d'extrémité (32) est susceptible de se déplacer à l'intérieur de la glissière (60) entre deux positions angulaires opposées associées aux deux positions stables du panneau (12).

2. Volet articulé selon la revendication 1, caractérisé en ce que le premier bord longitudinal d'extrémité (30) du coulisseau (26, 28) est fixé sur la face intérieure (20) du panneau (12).

3. Volet articulé selon l'une des revendications 1 ou 2, caractérisé en ce que le coulisseau (26, 28) comporte un collet radial (38) formé en saillie sur l'une (36) de ses faces cylindriques et dont une face radiale comporte un profil de came (42), en ce que le logement (60) de la coulisse (56) formant glissière comporte une partie complémentaire (68) qui reçoit le collet (38) en coulissement, et en ce que la coulisse comporte un élément suiveur de came (84) qui est monté coulissant à l'intérieur du corps (56, 58) de la coulisse selon une direction parallèle à l'axe (X-X) de la glissière (60, 68) et qui est sollicité élastiquement (86) en coopération avec le profit de came (42) porté par le collet radial (38) du coulisseau (26, 28).

4. Volet articulé selon la revendication 3, caractérisé en ce que le profil de came (42) comporte, agencés successivement depuis le premier bord longitudinal d'extrémité (30) vers le second bord longitudinal d'extrémité (32) du coulisseau (26, 28, 38), un premier cran (44) définissant la première position stable du panneau (12) , une première rampe (46) procurant un effet de rappel élastique du panneau (12) vers sa première position stable, une deuxième rampe (48), d'orientation opposée à celle de la première rampe (42), procurant un effet de rappel élastique du panneau (12) vers sa seconde position stable, et un second cran (50) définissant la seconde position stable du panneau (12).

5. Volet articulé selon la revendication 4, caractérisé en ce que le profil de came (42) se prolonge, au-delà du second cran (50), par une troisième rampe (54), de même orientation que la deuxième rampe (46), permettant le franchissement du doigt d'indexation (84) lors de l'introduction du coulisseau (26, 28) dans la glissière (60)

6. Volet articulé selon l'une quelconque des revendications 3 à 5, caractérisé en ce que le collet radial (38) est formé en saillie sur la face cylindrique convexe (36) du coulisseau (26, 28).

7. Volet articulé selon l'une quelconque des revendications 3 à 6, caractérisé en ce que le corps de la coulisse (56) est un boîtier en deux parties (58, 70) séparées par un plan de joint (72) perpendiculaire à l'axe (X-X) de la glissière (60).

8. Volet articulé selon la revendication 7, caractérisé en ce que le plan de joint (72) s'étend sensiblement au milieu de la partie complémentaire (68) du logement formant glissière (60) qui reçoit en coulissement le collet radial (38) avec son profil de came (42).

9. Volet articulé selon l'une quelconque des revendications 3 à 8, caractérisé en ce que le collet radial (38) est formé à l'une (40) des extrémités axiales du coulisseau (26, 28).

## Claims

1. Hinged flap (10) for closing an aperture giving access to a filling head connected to a motor vehicle fuel tank filler pipe, and the type having a movable panel (12) mounted so as to be hinged on an element of the structure of the vehicle about an axis (X-X) substantially parallel to the plane of the panel (12), and means of returning the panel elastically to a first stable position of closure of the aperture and a second stable position of access to the aperture, characterised in that the means (14) of hinging the panel (12) include a movable slide (26) in the form of a cylindrical annular sector (28) which is fixed to the panel (12) by a first one (30) of its longitudinal end edges and include a fixed cheek (56) whose body is fixed to an element of the structure of the vehicle and includes a housing (60) in the form of a cylindrical annular sector forming a channel, an open end of which receives the slide (26, 28), whose second longitudinal end edge (32) is able to move inside the channel (60) between two opposite angular positions associated with the two stable positions of the panel (12).

2. Hinged flap according to Claim 1, characterised in that the first longitudinal end edge (30) of the slide (26, 28) is fixed to the internal face (20) of the panel (12).

3. Hinged flap according to one of Claims 1 or 2, characterised in that the slide (26, 28) has a radial flange (38) formed so as to project on one (36) of its cylindrical faces and a radial face of which includes a cam profile (42), in that the housing (60) of the cheek (56) forming a channel has a complementary part (68) which slidably receives the flange (38), and in that the cheek has a cam follower element (84) which is mounted so as to cheek inside the body (56, 58) of the cheek in a direction parallel to the axis (X-X) of the channel (60, 68) and which is elastically forced (86) in cooperation with the cam profile (42) carried by the radial flange (38) of the slide (26, 28).

4. Hinged flap according to Claim 3, characterised in that the cam profile (42) has, arranged successively from the first longitudinal end edge (30) towards the second longitudinal end edge (32) of the slide (26, 28, 38), a first recess (44) defining the first stable position of the panel (12), a first ramp (46) procuring an effect of elastic return of the panel (12) to its first stable position, a second ramp (48), of orientation opposite to that of the first ramp (42), procuring the effect of elastic return of the panel (12) to its second stable position, and a second recess (50) defining the second stable position of the panel (12).

5. Hinged flap according to Claim 4, characterised in that the cam profile (42) is extended, beyond the second recess (50), by a third ramp (54), of the same orientation as the second ramp (46), enabling the locating finger (84) to be passed when the slide (26, 28) is introduced into the channel (60).

6. Hinged flap according to any one of Claims 3 to 5, characterised in that the radial flange (38) is formed so as to protect on the convex cylindrical face (36) of the slide (26, 28).

7. Hinged flap according to any one of Claims 3 to 6, characterised in that the body of the cheek (56) is a casing in two parts (58, 70) separated by a joint face (72) perpendicular to the axis (X-X) of the channel (60).

8. Hinged flap according to Claim 7, characterised in that the joint face (72) extends substantially at the middle of the complementary part (68) of the housing forming a channel (60) which slidably receives the radial flange (38) with its cam profile (42).

9. Hinged flap according to any one of Claims 3 to 8, characterised in that the radial flange (38) is formed at one (40) of the axial ends of the slide (26, 28).

## Patentansprüche

1. Gelenkklappe (10) zum Verschluß einer Tankmulde für den Zugang zu einem Einfülleinsatz, der mit einem Einfüllstutzen des Kraftstofftanks eines Kraftfahrzeugs verbunden ist, bestehend aus einer beweglichen Platte (12), die an einem Element der Fahrzeugstruktur schwenkbar um eine Achse (X-X) gelagert ist, die in etwa parallel zur Ebene der Platte (12) verläuft, sowie aus Mitteln zur elastischen Rückstellung der Platte in eine erste stabile Position für den Verschluß der Tankmulde und eine zweite stabile Position für den Zugang zur Tankmulde , **dadurch gekennzeichnet,** daß die Mittel (14) zur Anlenkung der Platte (12) ein bewegliches Gleitstück (26) in Form eines ringförmigen zylindrischen Segments (28) umfassen, das an der Platte (12) durch eine erste (30) seiner endseitigen Längskanten befestigt ist, und eine ortsfeste Gleitführung (56) umfassen, deren Körper an einem Element der Fahrzeugstruktur befestigt ist und eine Aufnahme (60) in Form eines ringförmigen zylindrischen Segments enthält, das eine Gleitbahn bildet, in deren offenes Ende das Gleitstück (26, 28) eingesetzt wird, dessen zweite endseitige Längskante (32) sich im Innern der Gleitbahn (60) zwischen zwei gegenüberliegenden Winkelpositionen verschieben kann, die den beiden stabilen Positionen der Platte (12) zugeordnet sind.

2. Gelenkklappe nach Anspruch 1, **dadurch gekennzeichnet,** daß die erste endseitige Längskante (30) des Gleitstücks (26, 28) an der Innenfläche (20) der Platte (12) befestigt ist.

3. Gelenkklappe nach einem der Ansprüche 1 oder 2, **dadurch gekennzeichnet,** daß das Gleitstück (26, 28) einen radialen Bund (38) umfaßt, der vorspringend an einer (36) seiner zylindrischen Flächen ausgebildet ist und der an einer radialen Fläche ein Nockenprofil (42) aufweist, daß die Aufnahme (60) der als Gleitbahn ausgebildeten Gleitführung (56) einen formschlüssigen Teil (68) umfaßt, in den der radiale Bund (38) verschiebbar eingesetzt ist, und daß die Gleitführung ein Nockennachführelement (84) umfaßt, das im Innern des Körpers (56, 58) der Gleitführung verschiebbar entlang einer Richtung gelagert ist, die Parallel zur Achse (X-X) der Gleitführung (60, 68) verläuft, und das im Zusammenwirken mit dem am radialen Bund (38) des Gleitstücks (26, 28) angebrachten Nockenprofil (42) elastisch beaufschlagt wird.

4. Gelenkklappe nach Anspruch 3, **dadurch gekennzeichnet,** daß das Nockenprofil (42), von der ersten endseitigen Längskante (30) zur zweiten endseitigen Längskante (32) des Gleitstücks (26, 28, 38) hintereinander angeordnet, eine erste Raste (44), die die erste stabile Position der Platte (12) bestimmt, eine erste Schräge (46), die eine elastische Rückstellung der Platte (12) in ihre erste stabile Position bewirkt, eine zweite Schräge (48), die entgegengesetzt zur ersten Schräge (42) ausgerichtet ist und eine elastische Rückstellung der Platte (12) zu ihrer zweiten stabilen Position bewirkt, und eine zweite Raste (50) umfaßt, die die zweite stabile Position der Platte (12) bestimmt.

5. Gelenkklappe nach Anspruch 4, **dadurch gekennzeichnet,** daß das Nockenprofil (42) hinter der zweiten Raste (50) durch eine dritte Schräge (54) mit der gleichen Ausrichtung wie die zweite Schräge (46) verlängert wird, die beim Einsetzen des Gleitstücks (26, 28) in die Gleitbahn (60) die Bewegung über den Rastfinger (84) hinaus ermöglicht.

6. Gelenkklappe nach einem der Ansprüche 3 bis 5**, dadurch gekennzeichnet,** daß der radiale Bund (38) vorspringend an der konvexen zylindrischen Fläche (36) des Gleitstücks (26, 28) ausgebildet ist.

7. Gelenkklappe nach einem der Ansprüche 3 bis 6, **dadurch gekennzeichnet,** daß der Körper der Gleitführung (56) ein Gehäuse mit zwei Teilen (58, 70) ist, die durch eine senkrecht zur Achse (X-X) der Gleitbahn (60) verlaufende Teilungsfläche (72) getrennt sind.

8. Gelenkklappe nach Anspruch 7, **dadurch gekennzeichnet,** daß sich die Teilungsfläche (72) in etwa in der Mitte des als Gleitbahn (60) ausgebildeten formschlüssigen Teils (68) der Aufnahme erstreckt, in den der radiale Bund (38) mit seinem Nockenprofil (42) eingesetzt wird.

9. Gelenkklappe nach einem der Ansprüche 3 bis 8, **dadurch gekennzeichnet,** daß der radiale Bund (38) an einem (40) der axialen Enden des Gleitstücks (26, 28) ausgebildet ist.
